Europäisches Patentamt

European Patent Office

Office européen des brevets

(11) Publication number: **0 225 036**
**A1**

(12)  **EUROPEAN PATENT APPLICATION**

(21) Application number: 86308249.1

(22) Date of filing: 23.10.86

(51) Int. Cl.⁴: **C 04 B 16/06**
 **E 04 C 5/07, C 08 J 7/04**

(30) Priority: 23.10.85 HU 408485

(43) Date of publication of application:
 **10.06.87** Bulletin **87/24**

(84) Designated Contracting States:
 **AT CH DE FR GB IT LI NL SE**

(71) Applicant: **MTA Természettudományi Kutato Laboratoriumai**
 **Budaörsi ut 45**
 **H-112 Budapest(HU)**

(71) Applicant: **Epitéstudományi Intézet**
 **Dávid Ferenc u. 6.**
 **H-1113 Budapest XI(HU)**

(72) Inventor: **Székely, Tamás**
 **Balogh Adám u. 7a**
 **H-1026 Budapest(HU)**

(72) Inventor: **Nagy, Gábor**
 **Minerva u. 3**
 **H-1118 Budapest(HU)**

(72) Inventor: **Dezsényi, István**
 **Szépvolgyi ut 93**
 **H-1037 Budapest(HU)**

(72) Inventor: **Babos, László**
 **Kikelet u. 26**
 **H-1126 Budapest(HU)**

(72) Inventor: **Ludvig, Lajos**
 **Borboly u. 10**
 **H-1021 Budapest(HU)**

(72) Inventor: **Valtinyi, Dániel**
 **Bartok Bela u. 88**
 **H-1113 Budapest(HU)**

(74) Representative: **Hedley, Nicholas James Matthew et al,**
 **T.Z. Gold & Company 9 Staple Inn**
 **London WC1V 7QH(GB)**

(54) **Process for producing reinforced bodies, especially precast building units.**

(57) The invention relates to a process for producing bodies, especially precast building units from a settable mixture and reinforcing fibres added thereto. The mixture is prepared by adding polypropylene fibres made antistatic and thus hydrophilic, whereby the embedding of the fibres in the matrix and their uniform distribution are significantly improved. A similar effect can be achieved also by crimping or profiled shaping/roughening/of the fibres. The above methods may be used in combination as well.

## PROCESS FOR PRODUCING REINFORCED BODIES, ESPECIALLY PRECAST BUILDING UNITS

The present invention relates to a process for producing bodies, especially precast building units from an after-setting mixture and reinforcing fibres added thereto.

Nowdays there are worldwide efforts to develop fibre reinforced concrete units e.g. covering units and supporting structures, as well. Fibres of various sorts are tested, steel wires, fiberglass, metal -glass filaments and synthetic fibres are equally used.

According to the Hungarian patent application 1766/83 staple fibres are added to the raw concrete as reinforcing inserts, made by splitting polypropylene film and by fibrillating the split strips. In order to facilitate placeability and compacting of the mixture, the quantity of the staple fibres, the so-called "critical fibre content" is decreased by gripping one end or both ends of the fibre bundle introduced into the matrix thereby increasing the fixation degree of the fibres. This solution prevents the fibre bundles from being completely loosened during mixing or only an optimum fibre loosening is allowed to promote proper bonding and, simultaneously, an advantageous consistency may be achieved for good placeability and compacting. A further advantage of gripping the fibre bundles resides in that an optimum charge of fibres may be applied promoting the most favourable mechanical properties, water-tightness, etc.

This method can be considered advantageous for preparing thin /7 to 15 mm/ plates or platelike structures as with such thin structures there are practically no placeability problems. However, when increasing the thickness - and at the same time the particle size of the additives - loosening the fibre bundles to an optimum degree by using the conventional mixing methods will be more and more difficult to cope with. As a result, especially when at the building or manufacturing site the appropriate means e.g. forced mixer are not available, it may happen that pouring the mixture into the mould begins before an optimum fibre distribution is achieved through mixing. In such circumstances the so-called "subjective factors" become more and more dominant, and may make doubtful the uniform quality of the end product.

The object of the present invention is to provide a process for producing bodies, especially precast building units from a settable material reinforced with polypropylene fibres which results in a good embedding of the fibres and their most advantageous possible distribution in the matrix and, thereby, in achieving an end product of high and uniform quality.

According to the invention, the fibres are introduced into the mixture as a separate step for establishing the three-dimensional fibre structure in the mixture, and for loosening the fibre bundles of fibrillated structure, instead of using the concrete mixing process. Thus, the human factors can be eliminated. For this purpose, however, we have to remove the difficulties impeding at present the effective application of the polypropylene fibres manufactured with smooth surface as monofilaments. There are two such basic difficulties, namely

- poor embedding of the fibres in the matrix, resulting first of all from the hydrophobic character of the fibres,
- electric charge of the staple fibres induced during cutting and resulting in formation of fibre flocks /tangled parts/ which cannot be loosened to separate the individual fibres and does not allow a uniform distribution of the fibres in the concrete mixture.

It is an important recognition that eliminating static charge of the fibres /i.e. to make them antistatic/ also contributes to decreasing their hydrophobic character /i.e. makes the fibres hydrophilic/, and produces a further effect promoting a better bond between the concrete and the surfaces of the fibres. Yet another recognition resides in that when embedding the staple fibres in the matrix, surface bonding and thereby the degree of the fibre fixation may also significantly increased by roughening and/or crimping the fibres advantageously during their manufacture.

In this way, binder, additive, water and reinforcing fibres are mixed together, the mixture is moulded and hardened or/and allowed to harden, and which process consists in preparing the mixture by adding polypropylene fibres previously treated for making them antistatic. The fibres may contain within their material or/and on their surface an antistatic agent, however, they can be made antistatic during cutting.

- 4 -

According to an embodiment of the invention, the mixture is prepared by adding polypropylene fibres containing - considering the electrically nonpolar, highly water repellent character of the fibres - a polarized polymer showing in given case hydrophilic properties, e.g. glycerine, pentaerythritol, glycerol monostearate or one or more monoesters of glycerine with other fatty acids, polyethylene glycol/s/ of low or medium molecular weight; polypropylene glycol/s/, polyol component/s/ as used for preparing polyurethane, aliphatic amine/s/, or a mixture of two or more of them as an antistatic agent.

The antistatic agents are introduced into the material of the polypropylene fibres either by applying them onto the surface of the polypropylene granules during manufacture of the fibres preceding feeding the granules into the extruder, or by preparing a master batch of polypropylene containing antistatic agent in high concentration and then extruding the fibres from this batch.

According to a further feature of the invention, the mixture is prepared by adding polypropylene fibres containing 0.1 to 5.0 mass % , expediently 0.3 to 1.0 mass% of an antistatic agent, in relation to the mass of the fibres.

According to another embodiment of the invention, the settable mixture is prepared by adding polypropylene fibres having a surface coating containing as an antistatic agent a mixture of water soluble polymer/s/ e.g. polyvinyl alcohol, carboxy methyl cellulose, hydroxy ethyl cellulose, polyethylene oxide and, as plasticizer thereof polyol /polyalcohol / type compound/s/ e.g. polyoxy propylene or polyoxy tetramethylene. In this case, the elimination of static charge takes place mainly in the last phase of the fibre manufacture or immediately thereafter. After the water as solvent has evaporated, there remains a thin polymer film on the surface of the fibres, having hydrophilic character. The quantity of the antistatic agents used as surface coating amounts to 0.1 to 1.0 mass%.

The fibres to be added to the mixture can be made antistatic, as already referred to earlier, also during cutting so that the components of the matrix i.e. cement powder, mixing water, plasticizer etc. are applied e.g. by spraying or powder blowing to the surface of the cut fibres falling down and being well separated from each other. As the matrix components applied to the fibres are basically the active ingredients of the cement bond, they have an advantageous influence to embedding of the fibres. The antistatic effect of the matrix components has, however, a limited time of effectivity thus, it assures only a limited possibility to make both operations, namely the cutting of fibres and concrete mixing, independent in time. In order that the antistatic effect produced during cutting of the fibres remain effective also within the concrete mixture, thereby resulting in separation of the fibres, thus ensuring independence in time from the concrete mixing, a further embodiment of the invention resides in that the settable mixture is prepared by adding fibres

- 6 -

having a surface coating containing, as an antistatic agent, a polymer being compatible to the material of the polypropylene fibre as well as to the components of the matrix and further containing matrix components applied to the fibres by dust blowing or/and by spraying them onto the surface of the fibres and thereby making them antistatic when falling down after cutting; preferably the settable mixture is prepared by adding fibres having a surface coating containing as a polymer, a copolymer emulsion of vinyl acetate--ethylene, vinyl acetate-vinyl chloride, vinyl acetate-vinyl versatate, vinyl acetate-butyl acrylate or a mixture of such copolymer emulsions. According to a further advantageous feature of the invention the settable mixture is prepared by adding fibres having a surface coating containing 0.01 to 10.0 mass%, expediently 0.1 to 1.0 mass% of a polymer, in relation to the mass of the fibres. It should be noted that a direct antistatic effect of such polymer/s/ is not required, they only have to promote adhering of the matrix components onto the surface of the polypropylene fibres. Among the polymers used for this purpose there obviously may be those having antistatic properties in themselves.

Another object of the present invention is a process for preparing fibre reinforced parts, specially precast building units wherein binder, additive, water and reinforcing fibres are mixed together, the mixture is moulded and allowed to harden, this process being characterized in that the mixture is prepared by adding polypropylene fibres having profiled shape with altering cross section or/and being crimped. It is expedient when the mixture is prepared by adding polypropylene fibres containing equally or substantially equally distanced, flattened configurations formed by cold deformation. The fibres having profiled shape may also be made antistatic in which case more than one effect promotes the optimum embedding and fibre distribution.

The profiled shaping of the fibres, as a result of which an individual fibre will show preferably a periodically repeated pattern, may be considered as roughening. Both the roughening and crimping result in an increase of the specific surface and thus, a better embedding of the fibres. Incidentally, the profiled shaping and crimping are linked with the fibre manufacturing process and technically can be carried out before making the rovings. The fibre being yet warm is slightly streched during winding and thereafter and, due to this, a waviness is produced which is hard to observe as long as the fibres are wound up, however becomes apparent when after cutting the fibres are unstressed.

The profiled shaping resulting in a periodically repeated pattern on the fibre can e.g. be produced so that during fibre manufacture the warm fibre bundle coming from the heat setting apparatus and having a temperature of e.g. 60 to 80 $^{O}$C, is passed between rolls with ribbed surfaces, the fibres being arranged adjacent to each other i.e. they are laid in the same plane. Thus, the ribs press - through cold deformation - uniform impresses into the fibres, which are periodically repeated. At the impressed places the fibre thickness may be as low as 70 % of the original thickness i.e. the fibre is flattened so that the cross sectional area remains unchanged but at right angles to the plane of impressing the width of the fibre will be increased. The impresses may be distanced at e.g. 0.5 mm.

According to any of the above described embodiments of the present invention, it is desirable that the after-setting mixture is prepared by adding polypropylene monofilaments in a quantity of 0.05 to 20 mass%, expediently 0.1 to 1.0 mass% in relation to the mass of the matrix, the fibres having a length of 10 to 100 mm, advantageously 20 to 60 mm and a diameter /thickness/ of 0.04 to 0.8 mm, advantageously 0.1 to 0.4 mm.

The invention will be explained in details by the following examples.

Example 1

Precast supporting structure units were produced by the process according to the invention. As reinforcing fibres were added to the matrix manufactured by an extruder preparing monofilament bundles. The starting material was polypropylene /Tippeln H 263 FU/. The melt emerging from the spinning head was pressed into a hot water bath where crystallization of the polypropylene took place. Then the thick unoriented filaments were exposed to strong streching /at a relation 1:9/ in two steps. Thereafter heat setting /relaxation/ followed. Finally, before winding up, the fibre bundle was passed through a bath containing surface coating agent based on polyvinyl alcohol, such as the product of the firm Henkel KGA /GFR/ under the trade name "Avirol 2003". From this surface coating agent an amount of 0.8 to 1.0 % in relation to the mass of the fibres, remained on the fibres after being dried.

The fibre bundles consisting of monofilaments made antistatic on their surface and thereby made hydrophilic in the above way, were cut to length of 40 mm in an automatic cutting device, and the cut fibres were filled into sacks and compacted, and delivered to the factory for manufacturing concrete units. Here, the matrix was composed following the formula as set forth below:

| Components | Mass% |
|---|---|
| Sand of particle size 0/1 mm | 31 |
| Sand of particle size 1/4 mm | 16 |
| Gravel of particle size 4/16 mm | 31 |
| Cement, grade 350 | 14 |
| Water | 7 |
| Cut fibres | 1 |

These components were homogenized in a conventional forced mixer, then the mixture was poured into moulds using a vibrator. The 7 days compressive strength of a unit prepared as described above exceeds by 15 to 20 % that of a concrete improved with fine crushing up to 60 % containing the same amount of cement but prepared without adding fibres, and it has a multiple impact strength and the same abrasive strength as compared to the latter. It is a prominent feature of the concretes prepared according to our invention that the standard deviation of the strength values is negligible, this fact proving that the structure

- 10 -

contains the polypropylene fibres uniformly distributed.

A reference experiment was also carried out
by adding staple fibres which were not made antistatic.
Apparently, the fibres were gathering in large flocks
already when filling them into the sacks. These flocks
could not be loosened even in the forced mixing
machine, thus, the concrete mixture contained the
fibres with a major inhomogenity, consequently, they
were not able to exert an appropriate reinforcing effect.

Example 2

Supporting structure units were made according
to Example 1 except that polypropylene granules Tipplen
H 331 F were used as starting material for the fibre
manufacture. On the surface of the granules 0.6 %
glycerol stearate /in relation to the mass of the          .
fibres/ was distributed in a dyeing drum. Then, the
granules were fed into an extruder. No antistatic agent
was applied to the surface of the fibres. The fibre
bundle was directly wound up and cut into a length of
40 mm. During cutting and thereafter, when filled into
sacks, the filaments did not gather to flocks, consequently, the concrete mixture contained the polypropylene fibres homogenously distributed, thus, the
end product had the excellent properties as described
in Example 1.

Exampel 3

The process was carried out according to
Example 2 except that a concrete shell construction
was prepared and fibres were added to the matrix, said
fibres having been gathered to a bundle after emerging
from the heat setting device, having still a temperature of about 60 to 80$^{\circ}$C and were passed between rolls
with ribbed surfaces the fibres being arranged adjacent to each other in the same plane, the ribs causing thereby periodic /equally distanced/ impresses pressed into the fibres under the effect of cold deformation. In the impressed area the fibre thickness was decreased as low as about 70 % of the original thickness while the cross sectional area remained unchanged. Thus, the width of the fibre was increased perpendicularly to the impresses and a periodic pattern was produced with a sidewise dimension of the impresses amounting to 0.5 mm. The quality of the end product was further increased as compared to that according to Example 1 as the compressive strength of the concrete shell construction proved to be higher by 20% than that measured previously.

Example 4

A concrete shell construction was prepared by using the process according to the invention. The composition of the matrix was the same as in Example 1. The starting material of the fibres to be added was also the same as in Example 1, however, eliminating of the static charge was carried out as follows:

After having wound up the fibre bundle, just before cutting it to length, the fibre bundle was passed through a spraying chamber and a drying chamber following thereto. The surface of the fibre bundle was sprayed in the spraying chamber with an aqueous emulsion of an ethylene-vinyl acetate copolymer containing 40% of a low molar weight vinyl acetate. This type substance is known among others under the trade name "ELVAX 40". In the second chamber an air stream was passed through at a temperature of $40^{\circ}C$ whereby the substance applied to the surface of the fibres was dried. The dried fibre bundle emerging from the drying chamber had a thin polymer layer on its surface. The fibre bundle with surface coating was then cut to a length of 40 mm. When, after such pretreatment, the fibres were introduced into an area containing cement powder, the cement particles adhered sufficiently to the surface of the cut fibres falling down in this area. Thus, the fibres with a cement layer on their surface were practically free from static charge thus preventing an eventual adhesion between the individual filaments due to the effect of electric force. The cut fibres having such surface coating did not gather into flocks when being filled into sacks, they could be uniformly distributed within the matrix and the pieces of fibres can appropriately be embedded due to the composite layer of polymer and cement on their surfaces.

The invention has the advantage of ensuring an optimum and uniform distribution of the fibres and their excellent embedding in the matrix thereby enabling to prepare a concrete product of perfect and uniform quality.

It is understood that the disclosed process is by no way limited to the examples given above but it might be realized in various ways within the scope of the invention.

- 13 -

## C L A I M S

1. A process for producing bodies, especially precast building units from an after-setting mixture and reinforcing fibres added thereto wherein binder, additive, water and reinforcing fibres are mixed together, the mixture is moulded and hardened or/and allowed to harden, c h a r a c t e r i z e d in that the mixture is prepared by adding polypropylene fibres previously treated for making them antistatic.

2. Process as claimed in claim 1, c h a - r a c t e r i z e d in that the mixture is prepared by adding polypropylene fibres —————— —————— containing an antistatic agent, e.g. a polarized polymer showing in given cases a hydrophilic effect e.g. glycerine, pentaerythrite, glycerol monostearate, or one or more monoesters of glycerine with other fatty acids, polyethylene glycol/s/ of low or medium molecular weight, polypropylene glycol/s/, polyol component/s/ as used for preparing polyurethane; aliphatic amine/s/, or a mixture of two or more of them as an antistatic agent and preferably in an amount of 0.1 to 5.0 mass %, expediently 0.3 to 1.0 mass %, of the antistatic agent, in relation to the mass of the fibres.

3. Process as claimed in claim 1 or claim 2, characterized in that the mixture is prepared by adding polypropylene fibres coated on their surface with an antistatic agent, which is preferably a mixture of water soluble polymer/s/ e.g. polyvinyl alcohol, carboxy methyl cellulose, hydroxy ethyl cellulose, polyethylene oxide and, as plasticizer thereof polyol /polyalcohol/ type compounds e.g. polyoxy propylene or polyoxy tetramethylene and preferably the amount of the antistatic agent is 0.01 to 10 mass %, expediently 0.1 to 1.0 mass %, in relation to the mass of the fibres.

4. Process as claimed in any of claims 1 to 3, c h a r a c t e r i z e d in that the after--setting mixture is prepared by adding fibres made antistatic during cutting.

5. Process as claimed in claim 6, c h a - r a c t e r i z e d in that the after-setting mixture is prepared by adding fibres having a surface coating containing as an antistatic agent a polymer being compatible to the material of the polypropylene fibres as well as to the components of the matrix and, further containing matrix components applied to the fibres by dust blowing or/ and by spraying them onto the surface of the fibres and thereby making them antistatic when falling down after cutting.

6. Process as claimed in claim 4 or 5, c h a r a c t e r i z e d in that the after--setting mixture is prepared by adding fibres having surface coating containing as a polymer a copolymer emulsion of vinyl acetate-ethylene, vinyl acetate-vinyl chloride, vinyl acetate-vinyl versatate, vinyl acetate-butyl acrylate, or a mixture of such copolymer emlusions.

7. Process as claimed in any of claims 4 to 6, c h a r a c t e r i z e d in that the after-setting mixture is prepared by adding fibres having a surface coating containing 0.01 to 10.0 mass%, expediently 0.1 to 1.0 mass% of a polymer, in relation to the mass of the fibres.

8. Process for producing bodies, especially precast building units from an after-setting mixture and reinforcing fibres added thereto wherein binder, additive, water and reinforcing fibres are mixed together, the mixture is moulded and hardened or allowed to harden, c h a r a c t e r i z e d in that the mixture is prepared by adding polypropylene fibres having profiled shape with altering cross section or/and being crimped and preferably by adding equally or substantially equally distanced polypropylene fibres of flattened configurations formed by cold deformation.

9. Process as claimed in claim 8, c h a r a c t e r i z e d in that .the after-setting mixture is prepared by adding polypropylene fibres having profiled shape or/and being crimped and made antistatic.

10. Process as claimed in any of claims 1 to 9, c h a r a c t e r i z e d in that the after-setting mixtures is prepared by adding polypropylene fibres in a quantity of 0.05 to 20 mass%, expediently 0.1 to 1.0 mass% in relation to the mass of the matrix, the fibres having a length of 10 to 100 mm, expediently 20 to 60 mm, and a diameter /thickness/ of 0.04 to 0.8 mm, expediently 0.1 to 0.4 mm.

European Patent
Office

**EUROPEAN SEARCH REPORT**

Application number

| DOCUMENTS CONSIDERED TO BE RELEVANT | | | EP 86308249.1 | |
|---|---|---|---|---|
| Category | Citation of document with indication, where appropriate, of relevant passages | | Relevant to claim | CLASSIFICATION OF THE APPLICATION (Int. Cl.4) |
| X | GB - A - 2 035 990 (HAWKINS AND TIPSON LTD)<br><br>* Claims; page 2, lines 57-84 *<br><br>-- | | 1,4-10 | C 04 B 16/06<br><br>E 04 C 5/07<br><br>C 08 J 7/04 |
| X | DE - A1 - 2 816 457 (ETERNIT-WERKE LUDWIG HATSCHEK; CHEMIEFASER LENZING AG)<br><br>* Claims1,2,10 *<br><br>-- | | 1 | |
| X | US - A - 4 039 492 (HAMILTON)<br><br>* Abstract *<br><br>---- | | 1 | |

| TECHNICAL FIELDS SEARCHED (Int. Cl.4) |
|---|
| C 04 B<br><br>E 04 C<br><br>C 08 J |

The present search report has been drawn up for all claims

| Place of search | Date of completion of the search | Examiner |
|---|---|---|
| VIENNA | 08-01-1987 | BECK |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82